# EUROPÄISCHE PATENTSCHRIFT

(11) **EP 2 634 969 B1**
(45) Veröffentlichungstag und Bekanntmachung des Hinweises auf die Patenterteilung: **22.04.2020**
(21) Anmeldenummer: 12196950.5
(22) Anmeldetag: 13.12.2012
(51) Int. Cl.: H04L 12/24, H04L 12/28, G06F 3/0484

(54) **Verfahren zum Betreiben eines Systems zur Heimautomatisierung sowie ein Heimautomatisierungssteuerungssystem**
Method for operating a system for home automation and a home automation control system
Procédé de fonctionnement d'un système destiné à la domotique ainsi qu'un système domotique

(30) Priorität: 29.02.2012 DE 102012003837
(43) Veröffentlichungstag der Anmeldung: 04.09.2013
(73) Patentinhaber: RWE Effizienz GmbH, 44139 Dortmund (DE)
(72) Erfinder: Wellner, Holger, 48268 Greven (DE)
(74) Vertreter: Cohausz & Florack

(56) Entgegenhaltungen:
- WO-A1-2011/088909
- WO-A2-2006/080975
- US-A1- 2005 097 478

## Beschreibung

Der Gegenstand betrifft ein Verfahren zum Betreiben eines Systems zur Heimautomatisierung sowie einen Heimautomatisierungssystemsteuerrechner.

Systeme zur Heimautomatisierung sind hinlänglich bekannt. So ist zum Beispiel unter der Bezeichnung EIB/KNX ein kabelgebundenes Heimautomatisierungssystem bekannt, bei dem über einen seriellen Bus Nachrichten zwischen Sensoren und Aktoren ausgetauscht und entsprechend vorgebbarer Regeln (Parametern) elektrische Verbraucher gesteuert werden. Ein solches Bussystem erfordert jedoch eine aufwändige Verkabelung, die fast ausschließlich bei einem Neubau realisierbar ist.

Die WO 2006/080975 A1 zeigt ein System zum vereinfachten Einrichten von Geräten durch das Bereitstellen von Geräteinformationen.

Die US 2005/0097478 A1 zeigt ein System zum Verteilen von Mediadaten an eine Vielzahl von Geräten.

Aus der DE 103 12 183 ist bekannt, Steuergeräte und Sensoren durch automatische Adressvergabe und statischer Zuordnung von Adressen zu Funktionen automatisch zu konfigurieren. Dieses System stellt jedoch eine enorme Einschränkung hinsichtlich der Flexibilität dar. Es können nur solche Funktionen gesteuert werden, die vorprogrammiert sind. Außerdem müssen zum Ansteuern der Funktionen dafür hergerichtete Sensoren angeschlossen werden. Eine Parametrierung kann nur in engen Grenzen erfolgen.

Aus der De 10 2006 062 190 B3 ist ein System bekannt, welches die Weiterleitung von Nachrichten zwischen Sensoren und Aktoren vereinfacht.

Bei der Nachrüstung von Heimautomatisierungslösungen in bestehende Elektroinstallationen eignen sich insbesondere funkbetriebene Lösungen. Hierbei kommunizieren Sensoren und Aktoren sowie ggf. zentrale Steuerrechner über Hochfrequenzfunk. Die im Nachfolgenden beschriebenen Sensoren und Aktoren können jeweils Sender oder Empfänger einer Kommunikationsnachricht sein. Vorzugsweise ist jedoch ein Sensor ein Sender einer Kommunikationsnachricht und ein Aktor ein Empfänger einer Kommunikationsnachricht.

Die Konfiguration von Heimautomatisierungssystemen ist jedoch aufwendig und kompliziert. Bei der Programmierung der Heimautomatisierungssteuerungssysteme ist es notwendig, Zuordnungen zwischen Sensoren und Aktoren, beispielsweise zwischen Schaltern bzw. Tastern und Schaltrelais herzustellen. Auch kann eine Zuordnung zwischen virtuellen Schaltern oder virtuellen Ereignissen, z.B. ein bestimmtes Ereignis wiedergebende Daten, z.B. Daten aus dem Internet und Aktoren notwendig sein. Aktoren können dabei ebenfalls durch virtuelle Aktionen dargestellt werden, wie z.B. das Senden von Daten oder das Setzen von Parametern, auch über das Internet.

Ferner ist es notwendig, zu definieren, welche Aktionen bei welchen benutzergesteuerten Ereignissen ausgelöst werden müssen. Hierzu müssen alle Sensoren als auch alle Aktoren des Heimautomatisierungssystems parametriert werden. Jede Veränderung in einem Heimautomatisierungssystem erfordert eine Umprogrammierung der Parameter der jeweiligen Sensoren bzw. Aktoren.

Aus den genannten Gründen ist es häufig wünschenswert, wenn voreingestellte Parameter für Sensoren und Aktoren vorliegen, um gewünschte Szenen oder Einstellungen möglichst benutzerfreundlich programmieren zu können.

Die Komplexität der Programmierung der Heimautomatisierungssteuerung erhöht sich weiter, wenn bei der Programmierung noch weitere Haushaltsgeräte, wie beispielsweise Spielkonsolen, Fernseher, Radios, Blu-Ray Player, Streaming Geräte oder auch sogenannte weiße Ware, wie beispielsweise Kaffeemaschinen, Toaster, Waschmaschinen, Spülmaschinen, Herde oder dergleichen eingebunden werden sollen. Bekannt sind Systeme, bei denen solche Geräte unmittelbar mit dem System zur Heimautomatisierung kommunizieren. Diese Geräte sind sehr teuer und aufwendig, da diese über Mittel verfügen müssen, um mit der Heimautomatisierungssteuerung kommunizieren zu können. Weitere Haushaltsgeräte können z.B. Alarmanlagen, Heizungen, PV-Anlangen, Ladesäulen, SmartMeter oder dergleichen sein
Andererseits ist es jedoch erwünscht, solche Geräte bei der Programmierung vom herkömmlichen Heimautomatisierungssystem einbinden zu können und insbesondere Anforderungen an diese Geräte erfüllen zu können. Beispielsweise ist es gewünscht, dass ein Fernseher an einer schaltbaren Steckdose angeschlossen ist, um den Standby Betrieb durch Schalten eines Aktors zu unterbinden und den Fernseher gänzlich vom Stromnetz zu trennen. Hierzu wäre es notwendig, zunächst eine Verknüpfung zwischen einem bestimmten Sensor und einem bestimmten Aktor, hier einem Schaltaktor, herzustellen. Eine solche Programmierung wird häufig als benutzerunfreundlich angesehen.

Aus diesem Grunde lag dem Gegenstand die Aufgabe zugrunde, Haushaltsgeräte in besonders einfacher Weise in Systeme zur Heimautomatisierung einbinden zu können.

Diese Aufgabe wird durch ein Verfahren nach Anspruch 1 sowie einen Steuerrechner nach Anspruch 11 als auch ein System nach Anspruch 12 gelöst.

Es ist erkannt worden, dass verschiedene Haushaltsgeräte, unter anderem die oben genannten, in ein System zur Heimautomatisierung leichter eingebunden werden können, wenn die Programmierung der Heimautomatisierungssteuerung zur Einbindung solcher Geräte erleichtert wird. Aus diesem Grunde wird vorgeschlagen, dass ein Gerät mittels einer den Gerättyp kennzeichnenden Kennung sich erkennbar macht. Hierzu ist es beispielsweise möglich, dass ein von einem Kunden erworbenes Gerät, sobald es in Betrieb genommen wird, seine kennzeichnende Kennung aussendet bzw. verfügbar macht. Die kennzeichnende Kennung kann eine Art Typenschild sein, welches es ermöglicht, den Gerätetyp zu erkennen. Eine Kennung kann beispielsweise derart sein, dass ein Gerät als Spielkonsole, Fernseher, Radio, Blu-Ray Player, Streaming Gerät, weiße Ware, wie beispielsweise Kaffeemaschine, Toaster, Waschmaschine, Spülmaschine, Herd, oder als Alarmanlage, Heizung, PV-Anlange, Ladesäule für das Laden eines Elektromobils oder ein SmartMeter oder dergleichen gekennzeichnet wird und mittels der Kennung gegenüber dem Heimautomatisierungssystem bekannt gemacht wird.

Dadurch, dass in dem System zur Heimautomatisierung die den Gerätetyp kennzeichnende Kennung bekannt gemacht wird, ist es möglich, für den entsprechenden Gerätetyp angepasste Parameteroptionen aufzurufen. Parameteroptionen können Parameter sein, die für die Einstellung von Sensoren und/oder Aktoren des Heimautomatisierungssystems nutzbar sind.

Bei der Programmierung der Heimautomatisierungssteuerungssysteme erfolgt eine Zuordnung zwischen Sensoren und Aktoren, beispielsweise zwischen Schaltern bzw. Tastern und Schaltrelais. Nachfolgend ist dabei stets auch eine Zuordnung zwischen virtuellen Schaltern oder virtuellen Ereignissen, z.B. ein bestimmtes Ereignis wiedergebende Daten, z.B. Daten aus dem Internet und Aktoren oder virtuellen Aktoren/Aktionen mit gemeint. Virtuelle Aktoren/Aktionen können Aktionen wie z.B. das Senden von Daten oder das Setzen von Parametern, auch über das Internet, auslösen bzw. darstellen.

Ein Beispiel für Parameteroptionen kann sein, dass für einen Tastsensor Verknüpfungsparameter festgelegt werden, die diesen Tastsensor mit einem Schaltaktor und/oder einem Jalousieaktor verbinden. Ferner kann eine Ereignissteuerung mit dem Tastsensor verknüpft werden, derart, dass beim Tasten ein Ein/Aus-Befehl an den Schaltaktor gesendet wird und zusätzlich ein Auf/Ab-Befehl an den Jalousieaktor. Dann kann eine weitere Parameteroption für den Schaltaktor vorliegen, die diesen mit dem genannten Tastsensor verknüpft und die Schaltbefehle zum Ein- und Ausschalten nutzt. Für einen Jalousieaktor kann eine Parameteroption darin bestehen, dass dieser mit dem entsprechenden Tastsensor verbunden wird und andererseits das Auf- und Abfahren von Jalousien bis zu einem gewissen Endpunkt vorgegeben ist.

Anhand der oben vorgestellten beispielhaften Parameteroptionen ist erkennbar, dass eine Vielzahl von Einstellungen an Sensoren und Aktoren notwendig sind, um diese korrekt zu parametrieren, um das System zur Heimautomatisierung an das neue Haushaltsgerät anzupassen.

Gegenständlich wird nun vorgeschlagen, dass für den Gerätetyp angepasste Parameteroptionen einem Benutzer zur Darstellung auf einer Benutzeroberfläche zur Auswahl angeboten werden. Der Benutzer kann dann aus den bereits voreingestellten Parameteroptionen auswählen und die Parametrierung der Sensoren und Aktoren erfolgt anschließend automatisch.

In dem genannten Beispiel bekäme der Benutzer zum Beispiel angezeigt, dass sein Fernseher besonders komfortabel betrieben werden kann, wenn die Parameteroption gewählt wird, die das Ein- und Ausschalten des Fernsehers bei gleichzeitigen Auf- und Abfahren einer Jalousie bedingt.

Ein anderes Beispiel kann darin bestehen, dass, wenn eine Spielkonsole erkannt wird, eine Parameteroption angeboten wird, die automatisch beim Drücken einer Taste das Licht abdunkelt und Jalousien gänzlich herunterfährt. Auch wäre eine Parameteroption für ein Satz von Sensoren und Aktoren denkbar, die es ermöglicht, eine Waschmaschine zu bestimmten Tages- und Nachtzeiten ein- und auszuschalten. Eine manuelle Programmierung entfällt, da der Nutzer lediglich die Parameteroptionen auswählen muss, die er für geeignet hält.

Für ein Gerät können verschiedene Sätze von Parameteroptionen vorhanden sein. Die entsprechenden Parameteroptionen können lokal in einer Datenbank oder auch in einem netzseitigen, entfernt von dem Heimautomatisierungssteuerungssystem angeordneten Zentralrechner in einer Datenbank gespeichert sein. Es können mit verschiedenen Parameteroptionen verschiedene Szenarien für verschiedene Gerätetypen hinterlegt sein und abhängig von einer Information über die den Gerätetyp kennzeichnenden Kennung können die verfügbaren Sätze von Parameteroptionen ausgewählt und an das System zur Heimautomatisierung übermittelt werden. Diese können dann dem Benutzer zur Auswahl angeboten werden.

Zu Beginn einer Installation ist es jedoch notwendig, zu erfahren, ob ein Nutzer das Haushaltsgerät tatsächlich in sein System zur Heimautomatisierung einbinden möchte. Aus diesem Grunde wird auch vorgeschlagen, dass eine Information über das Haushaltsgerät dem Benutzer auf einer Benutzeroberfläche angezeigt wird. Dies kann derart sein, dass nachdem die den Gerätetyp kennzeichnende Kennung empfangen wurde, ermittelt wird, welche Bezeichnung das Gerät hat. Anschließend wird diese Bezeichnung als Information über das Haushaltsgerät dem System zur Heimautomatisierung mitgeteilt und auf der Benutzeroberfläche angezeigt. Der Benutzer erfährt somit unmittelbar nachdem er ein Gerät in Betrieb genommen hat, ob er dieses in sein System zur Heimautomatisierung einbinden kann.

Anschließend kann es möglich sein, dass der Benutzer das angezeigte Gerät auswählt. Hiermit kann der Benutzer bestätigen, dass er dieses Gerät in sein System zur Heimautomatisierung einbinden möchte und eine Programmierung vorgeschlagen bekommen möchte. Im Anschluss daran werden die für den Gerätetyp entsprechenden Parameteroptionen von dem Zentralrechner oder der Datenbank angefordert. Hierzu kann dem Zentralrechner oder die Datenbank die den Gerätetyp kennzeichnende Kennung zusammen mit weiteren Informationen über das Heimautomatisierungssystem des Nutzers mitgeteilt werden. Der Zentralrechner kann ein externer Rechner, z.B. ein über ein Weitverkehrsnetz, z.B. das Internet erreichbarer Rechner sein. Auch kann der Zentralrechner ein für das System der Hausautomatisierung zentraler Rechner oder eine Datenbank, der aber über ein lokales Netzwerk, z.B. LAN oder einen Bus erreichbar ist, sein. Wenn von zentralem Rechner die Rede ist, sind stets beide Alternativen gemeint.

Die Programmierung des Systems zur Heimautomatisierung abhängig von genutzten Haushaltsgeräten hängt jedoch auch stark von den verfügbaren aktuellen Aktoren und Sensoren innerhalb eines Haushalts ab. Eine Programmierung ist vorzugsweise dann möglich, wenn ein Gerät auch tatsächlich in Reichweite eines geeigneten Aktors oder Sensors ist. Insbesondere kann es notwendig sein, dass geeignete Aktoren und/oder Sensoren für ein entsprechendes Gerät vorhanden sind. Z.B. können für eine Alarmanlage, die mit allen Tür-/Fensterkontakten im Haus verbunden werden soll, die geeigneten Aktoren/Senoren/Virtuelle Aktionen vorgeschlagen werden. Hier könnte z.B. nach einzelnen Räumen unterschieden werden oder nach dem ganzen Haus oder eben nach einer Gruppe von Senoren/Aktoren/virutellen Aktionen oder einer Gruppe von Räumen oder dergleichen.

Um dies herauszufinden, wird auch vorgeschlagen, dass der Benutzer an der Benutzeroberfläche eingibt, in welchem Raum sich das jeweilige Haushaltsgerät befindet. Dies kann beispielsweise gleichzeitig mit dem benutzergesteuerten Auswählen des angezeigten Haushaltsgeräts erfolgen. So kann der Benutzer beispielsweise angeben, dass ein Fernseher in seinem Wohnzimmer aufgestellt ist. Wenn diese Information bekannt ist, kann ermittelt werden, welche Sensoren und/oder Aktoren im Wohnzimmer vorhanden sind, über die eine Steuerung des Fernsehers erfolgen kann. In einem anderen Beispiel kann beispielsweise eine Waschmaschine von einem Benutzer an der Benutzeroberfläche ausgewählt werden und der Benutzer kann angeben, dass die Waschmaschine sich in einem Kellerraum befindet. Dann kann ermittelt werden, welche Aktoren und/oder Sensoren in dem Kellerraum vorhanden sind, oder auch, welche Aktoren/Sensoren geeignet sind, die Waschmaschine zu steuern.

Aus diesem Grunde wird vorgeschlagen, dass abhängig von dem empfangenen Standortinformationen ein Satz aus den verfügbaren Sensoren und/oder Aktoren ausgewählt wird und dass nur diesem Satz Parameteroptionen zugeordnet werden. Dabei ist es notwendig, zunächst zu überprüfen, welche Aktoren/Sensoren/virtuelle Aktionen im System vorhanden sind. Anschließend kann eine Auswahl der verfügbaren Aktoren/Sensoren/virtuelle Aktionen vorgeschlagen werden. Hat ein Nutzer z.B. keine Rollladensteuerung, dann darf sie ihm auch nicht vorgeschlagen werden.

Es ist erkannt worden, dass lediglich solche Parameteroptionen von Interesse sind, die für Sensoren und/oder Aktoren geeignet sind, die aufgrund ihres Standorts und/oder Funktion für das entsprechende Haushaltsgerät geeignet sind. In dem obigen Beispiel würde beispielsweise eine schaltbare Steckdose als Aktor im Wohnzimmer ausgewählt. Mögliche Tastsensoren wären beispielsweise alle Taster innerhalb des Wohnzimmers oder auch beispielsweise Taster im Schlafzimmer. Die entsprechenden Parameteroptionen für diesen Satz von Aktoren und/oder Sensoren können so ermittelt werden. Dies erspart es, eine Vielzahl von Parameteroptionen einem Benutzer anzubieten, von denen die Mehrzahl ungeeignet ist, das entsprechende Haushaltsgerät einzubinden.

Wie bereits beispielhaft erläutert, kann ein möglicher Aktor eine schaltbare Steckdose in der Nähe des Fernsehers sein. Um diese Steckdose zu schalten, wäre es notwendig, dass zum Einen ein Ein/Aus-Befehl an der Steckdose ausgeführt werden kann und andererseits, dass dieser Aktor mit einem entsprechenden Schalt- oder Tastsensor verknüpft ist. Diese beiden Parameter könnten als Parameteroptionen für den entsprechenden Schaltaktor angeboten werden.

Wie Eingangs bereits erläutert, ist es notwendig, zur Parametrierung von Sensoren und Aktoren diese einander zuzuordnen als auch ereignisgesteuerte Aktionen innerhalb der Sensoren und Aktoren festzulegen. Um dies mittels der Parameteroptionen zu ermöglichen, wird vorgeschlagen, dass die Parameteroptionen Zuordnungsinformationen von Sensoren zu Aktoren und hierzu entsprechende Einstellung der einander zugeordneten Sensoren und Aktoren umfasst. Somit kann in einer Parameteroption für den Satz von Sensoren und Aktoren eine Zuordnung festgeschrieben sein. So kann beispielsweise eine schaltbare Steckdose in einem Wohnzimmer den verschiedenen Schaltern im Wohnzimmer zugeordnet werden. Der Benutzer kann eine solche Zuordnung dann besonders einfach auswählen und die entsprechende Parametrierung erfolgt automatisch.

Um das Haushaltsgerät dem System zur Heimautomatisierung kenntlich zu machen, wird vorgeschlagen, dass die den Gerätetyp kennzeichnende Kennung unmittelbar von dem Haushaltsgerät empfangen wird. Hierzu kann das Haushaltsgerät einen Funkchip enthalten, der seine Kennung aussendet. Beispielsweise ist es möglich, dass das Gerät z.B. mittels WLAN seine Kennung aussendet. Der Heimautomatisierungssystemsteuerrechner kann an das gleiche WLAN angeschlossen sein und erkennen, dass eine entsprechende Kennung im WLAN ausgesendet wird und eine entsprechende Anzeige gegenüber einem Benutzer initiieren. Auch ist es möglich, dass diese Kennung in einem LAN ausgesendet wird. Andererseits ist es auch möglich, dass das Haushaltsgerät über einen Funkchip verfügt, der das Funkprotokoll des Systems zur Heimautomatisierung beherrscht und somit unmittelbar über das Funkprotokoll des Systems zur Heimautomatisierung seine Kennung aussendet.

Auch ist es möglich, dass das Haushaltsgerät zunächst über ein Weitverkehrsnetz, beispielsweise über das Internet, seine Kennung aussendet und diese Kennung von einem Zentralrechner empfangen wird. In dem Zentralrechner kann dann eine Zuordnung zu einem Haushalt erfolgen und anschließend kann die Kennung dem Heimautomatisierungssystemsteuerrechner in dem zugeordneten Haushalt mitgeteilt werden.

Auch ist es möglich, dass der Heimautomatisierungssystemsteuerrechner die Kennung aus einem Gerät ausliest. Hierzu kann der Steuerrechner beispielsweise stündlich ein Polling durchführen, um abzufragen, ob neue Haushaltsgeräte verfügbar sind. Dieses Polling kann auch täglich oder wöchentlich erfolgen. Auch ist es möglich, dass ein Polling benutzergesteuert erfolgt.

Gemäß einem Ausführungsbeispiel wird vorgeschlagen, dass die Parameteroptionen zumindest ein Einstellungsprofil für eine aufeinander abgestimmte Einstellung einer Mehrzahl von Sensoren und/oder Aktoren umfasst. Wie bereits erläutert, reicht es häufig nicht aus, nur einen Aktor bzw. einen Sensor zu programmieren. Es ist notwendig, Sensoren und Aktoren einander zuzuordnen und entsprechende ereignisgesteuerte Aktionen zu bestimmen. Dies kann in einem Einstellungsprofil enthalten sein. Aufeinander abgestimmte Einstellungen können sowohl die Verknüpfung von Sensoren zu Aktoren als auch die Verknüpfung mit ereignisgesteuerten Aktionen und Regeln sein. Das Einstellprofil kann auch eine Szene sein.

Wenn in dem Zentralrechner eine Gerätekennung empfangen wird, sei es unmittelbar von dem Haushaltsgerät oder durch eine Anfrage durch den Heimautomatisierungssystemsteuerrechner, kann in dem Zentralrechner eine entsprechende Parameteroption ausgewählt werden. Es liegt auf der Hand, dass beispielsweise für eine Waschmaschine eine andere Parameteroption notwendig ist, als für ein Fernseher. Je nachdem, welches Haushaltsgerät detektiert wurde, können entsprechende Parameteroptionen ausgewählt werden und dem Benutzer zur Auswahl angeboten werden.

Geräte der Heimautomatisierung können ein Heimautomatisierungssystemsteuerrechner (zentrales Steuergerät, Zentrale, Server, Smart Home Controller SHC) und/oder Sensoren und/oder Aktoren sein.

Ein Sensor kann beispielsweise ein Schalter, ein Bewegungsmelder, ein Taster, ein Türkontakt, ein Thermostat, ein Fensterkontakt, ein Bildsensor, ein Helligkeitssensor, ein Temperatursensor, ein Binärsensor, ein Mikrofon, oder eine andere Einrichtung zum Erfassen von Umweltveränderungen sein.

Ein Aktor kann insbesondere ein Relais, ein Ventil, ein Motor, ein Stellmotor, ein Dimmer, eine Rolladensteuerung, ein Schalter, ein Signalgeber, ein Infrarotsignalgeber, ein akustischer Signalgeber, ein Bedienteil, ein Informationsterminal oder ein sonstiges Gerät zum Durchführen von Schaltvorgängen, Steuervorgängen, Regelvorgängen oder sonstigen Aktionen und/oder zum Ausgeben von Informationen und Zuständen sein.

Ein zentraler Heimautomatisierungssystemsteuerrechner kann ein zentral angeordneter Rechner sein, der Steuerfunktionen übernimmt. Dieser kann Parameter für die Konfiguration von Sensoren und Aktoren überarbeiten und aussenden. Der Server kann beispielsweise mit einem Weitverkehrsnetz verbunden sein. Hierbei ist es beispielsweise möglich, dass der Server über einen entsprechenden Router mit einem Weitverkehrsnetz, beispielsweise einem TCP/IP basiertes Weitverkehrsnetz verbunden ist. Insbesondere kann es möglich sein, auf den Server über das Weitverkehrsnetz zuzugreifen und aus der Ferne Konfigurationen vorzunehmen. Der Server kann dergestalt sein, dass er lediglich zu Konfigurationszwecken mit Sensoren und Aktoren kommuniziert.

Das Heimautomatisierungssystem kann darüber hinaus so ausgelegt sein, dass eine Kommunikation zwischen Sensoren und Aktoren zur Steuerung in Reaktion auf Ereignisse erfolgt, ohne dass der Server zwischengeschaltet ist. Hierdurch lässt sich eine autarke Heimautomatisierung realisieren, die auch ohne einen Server funktioniert. Dies ist jedoch nur dann sicher möglich, wenn ein Netzwerkschlüssel für die Verschlüsselung von Kommunikation bei den Geräten bekannt ist. Eine Kommunikation zwischen einem Sensor und einem Aktor wird beispielsweise bei einem Ereignis an einem Sensor notwendig, bei welchem Ereignis der Aktor eine Aktion durchführen soll.

Am Eingang des Gerätes kann gegenständlich ein Ereignis detektiert werden. Ein Ereignis kann eine Benutzerinteraktion, beispielsweise das Betätigen eines Schalters oder Tasters, eine Veränderung von Umweltbedingungen, eine Bewegung, ein Öffnen eines Fensters, eine Temperaturänderung oder eine sonstige Veränderung von Umgebungsbedingungen sein.

Die Kommunikationsschnittstelle in den Geräten des Systems zu Heimautomatisierung kann beispielsweise eine Einrichtung zur Kommunikation über ein Drahtlosnetzwerk sein. Auch kann die Kommunikationsschnittstelle über ein drahtgebundenen Netzes kommunizieren. Beispielsweise kann eine Kommunikation über LAN, WLAN, Bluetooth oder dergleichen erfolgen. Insbesondere kann die Kommunikationsschnittstelle beispielsweise bei einer Frequenz von 868Mz mit einem Frequenz Shift Key Nachrichten aussenden. Insbesondere sind Datenraten von 10KB/s möglich.

Die Kommunikation mittels der Kommunikationsschnittstelle kann eine bidirektionale Kommunikation auf einem Bus, insbesondere einem Funkbus sein. Die Kommunikationsschnittstelle kann zur Verschlüsselung der übertragenen Daten eingerichtet sein. Die Kommunikation über die Kommunikationsschnittstelle kann im Multicast als auch im Unicast Modus erfolgen.

Die zuvor genannten Verfahren können auch als Computerprogramm oder als auf einem Speichermedium gespeichertes Computerprogramm realisiert werden. Hierbei kann sensorseitig, aktorseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der abhängigen Ansprüche unter Umgehung der Merkmale oder von Teilmerkmalen der unabhängigen Ansprüche in Alleinstellung oder frei miteinander kombiniert eigenständig erfinderisch sein. Auch die in der Beschreibungseinleitung genannten Merkmale lassen sich in erfinderischer Weise mit den Merkmalen der unabhängigen und abhängigen Ansprüche frei kombinieren.

Nachfolgend wird der Gegenstand anhand einer Ausführungsbeispiele zeigenden Zeichnung näher erläutert.
- Fig. 1: zeigt schematisch ein Gerät, das als Sensor gebildet ist;
- Fig. 2: zeigt schematisch ein Gerät, das als Aktor gebildet ist;
- Fig. 3: zeigt einen schematischen Aufbau eines Heimautomatisierungssystems;
- Fig. 4: zeigt ein Heimautomatisierungssystem mit einem Fernseher;
- Fig. 5: zeigt eine Kommunikation zur Konfiguration eines Heimautomatisierungssystems mit einem Fernseher;
- Fig. 6: zeigt an den Fernseher angepasste Parameteroptionen.

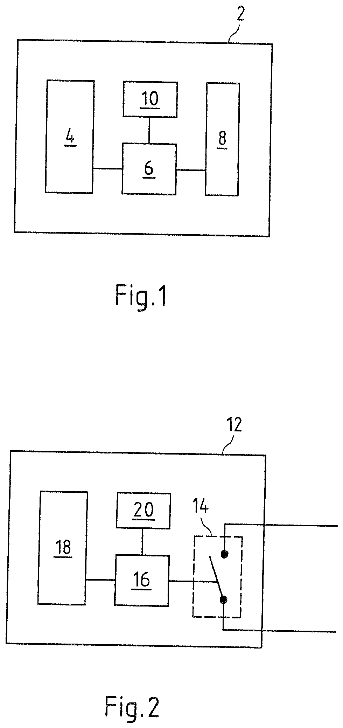

Fig. 1 zeigt schematisch einen Sensor 2 mit einem Tasterfeld 4, welches als Eingang zum Detektieren von Ereignissen verwendet wird. In dem Sensor 2 ist darüber hinaus ein Prozessor 6 angeordnet, zum Auswerten der detektierten Ereignisse an dem Tasterfeld 4. In dem Sensor 2 ist auch eine Funkschnittstelle 8 vorgesehen, welche über den Prozessor 6 angesteuert wird. Mittels der Funkschnittstelle 8 ist es möglich, über ein Funkprotokoll Nachrichten auszusenden und zu empfangen. Die Funkschnittstelle 8 ermöglicht eine Kommunikation über eine Luftschnittstelle. Mittels der Funkschnittstelle 8 ist eine Kommunikation nach einem Burst-Wakeup Verfahren, wie es beansprucht ist, und nachfolgend beschrieben wird, möglich.

Ferner ist in dem Sensor 2 ein Speicher 10 angeordnet. In dem Speicher 10 können temporäre Schlüssel und Netzwerkschlüssel gespeichert werden. Mit Hilfe des Sensors 2 ist es möglich, Ereignisse zu erfassen und in entsprechende Nachrichten umzusetzen.

Fig. 2 zeigt einen Aktor 12. Der Aktor 12 weist einen Ausgang 14 auf, über den beispielsweise elektrische Verbraucher gesteuert werden können. Zu erkennen ist, dass in dem dargestellten Beispiel der Ausgang 14 mit einem Schalter verbunden ist, über den elektrische Kontakte am Ausgang 14 kurz geschlossen oder getrennt werden können. Der Ausgang 14 bzw. der Schalter wird über einen Prozessor 16 angesteuert, der ebenfalls in dem Aktor 12 angeordnet ist. Der Prozessor 16 ist mit einer Funkschnittstelle 18 verbunden. Über die Funkschnittstelle 18 können Daten über die Luftschnittstelle beispielsweise mit der Funkschnittstelle 8 als auch mit einem zentralen Server ausgetauscht werden. Die Funkschnittstelle 8 ermöglichst es dem Aktor 12, Daten zu senden und zu empfangen.

Schließlich ist in dem Aktor 12 ein Speicher 20 angeordnet, in dem temporäre Schlüssel und Netzwerkschlüssel gespeichert sein können.

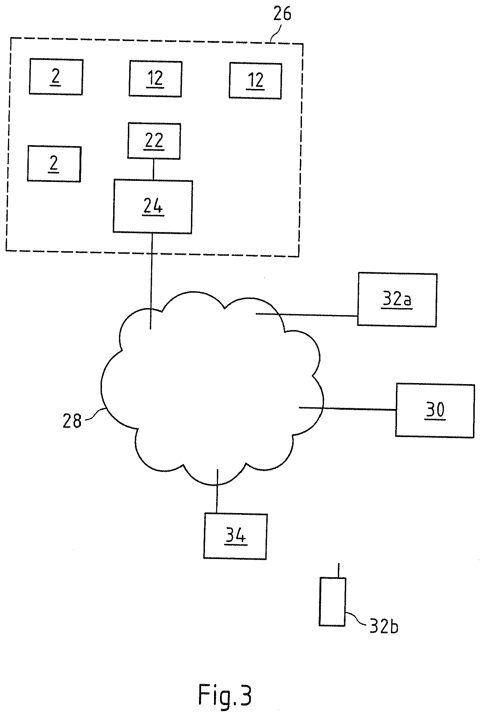

Die in Fig. 1 und 2 gezeigten Sensoren 2 und Aktoren 12 lassen sich in einem in Fig. 3 gezeigte Heimautomatisierungssystems einsetzen. Fig. 3 zeigt beispielsweise die Umgebung 26 eines Hauses oder einer Wohnung. In dieser Umgebung 26 ist ein Router 24 vorgesehen, der eine Kommunikationsverbindung mit dem Internet 28 zur Verfügung stellt und Datenpakete in das Internet 28 aussendet und aus dem Internet 28 empfangen kann. Der Router kann ein DSL Modem mit Routerfunkionen sein. Auch kann der Router ein UMTS/EDGE Anschlussgerät sein, welches eine drahtlose Verbindung in ein Weitverkehrsnetz ermöglicht. An den Router 24 ist ein Server 22 (Smart Home Controller SHC) angeschlossen. Über den Router 24 kann der SHC 22 Datenpakete mit dem Internet 28 austauschen. Der SHC 22 kann über eine Funkverbindung eine Kommunikation mit den Sensoren 2 als auch den Aktoren 12 aufbauen. Die Kommunikation kann bidirektional sein und auf Anforderungen erfolgen.

An das Internet 28 ist eine zentrale Verwaltungseinheit 30 angeschlossen. Die zentrale Verwaltungseinheit 30 kann über das Internet 28 und den Router 24 eine Kommunikation mit dem SHC 22 aufnehmen, um beispielsweise eine Konfiguration der Sensoren 2, der Aktoren 12 oder des SHCs 22 vorzunehmen.

Die Konfiguration des SHCs 22 als auch der Sensoren 2 und der Aktoren 12 über das Internet 28 kann beispielweise von einem privaten Personalcomputer 32a erfolgen. Hierzu kann der Personalcomputer 32a beispielsweise eine Verbindung über das Internet 28 mit der zentralen Verwaltungseinheit 30 aufbauen und mittels der zentralen Verwaltungseinheit 30 eine Konfiguration des SHCs 22, des Sensors 2 oder des Aktors 12 vornehmen. Diese Konfigurationsänderung kann dann über das Internet 28 von der zentralen Verwaltungseinheit 30 über den Router 24 zu dem SHC 22 übermittelt werden. Auch kann eine Konfiguration beispielsweise über ein Mobiltelefon 32b erfolgen, wobei das Mobiltelefon 32b über einen Gateway 34 mit dem Internet 28 verbunden ist und über das Gateway 34 eine Verbindung mit der zentralen Verwaltungseinheit 30 aufnehmen kann.

Eine sichere Kommunikation zwischen dem SHC 22 und der zentralen Verwaltungseinheit 30 kann beispielsweise dadurch gewährleistet sein, dass der SHC 22 mittels des Routers 24 einen Kommunikationstunnel durch das Internet 28 mit der zentralen Verwaltungseinheit 30 aufbaut, sobald der SHC 22 mit dem Router 24 verbunden wird. Hierzu muss der SHC 22 lediglich die feste IP-Adresse der zentralen Verwaltungseinheit 30 kennen und mittels eines Kennworts und eines Schlüssels die Kommunikation mit der zentralen Verwaltungseinheit 30 verschlüsseln. Über diese verschlüsselte Verbindung kann nun von der zentralen Verwaltungseinheit 30 eine Konfiguration des SHCs 22, des Sensors 2 als auch des Aktors 12 erfolgen. Die Konfiguration kann von dem Personalcomputer 32a oder dem Mobiltelefon 32b gesteuert werden. Auch ist es möglich, mittels des Personalcomputers 32a als auch des Mobiltelefons 32b Ereignisse am Sensor 2 zu generieren, um somit bestimmte Aktionen der Aktoren 12 auszulösen. Auch können Status von den Sensoren 2 und den Aktoren 12 so abgefragt werden.

Die Kommunikation zwischen SHC 22, Aktoren 12 und Sensoren 2 ermöglicht zum Einen die Konfiguration der Sensoren 2 und der Aktoren 12 als auch die Steuerung von an den Aktor 12 angeschlossenen Haushaltsgeräte, zum Beispiel durch Nutzung der Parameteroptionen, mittels der Sensoren 2. Die Aktor-Steuerung wird durch Verknüpfungen zwischen einem Sensor 2 und Aktoren 12 als auch durch Sensor-Parameter und/oder Aktor-Parameter reguliert, die zum Beispiel in den Parameteroptionen bereitgestellt werden.

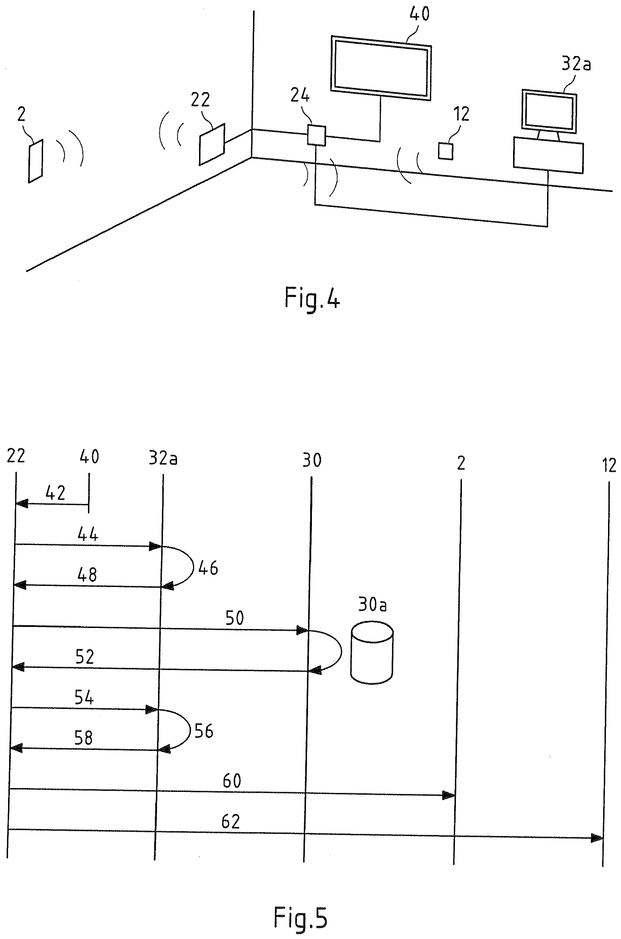

Fig. 4 zeigt schematisch ein Wohnzimmer, in dem ein Fernseher 40 aufgestellt ist. In dem Wohnzimmer befindet sich neben dem Fernseher 40 ein Schalter 2 sowie eine schaltbare Steckdose 12. Ferner ist zu erkennen, dass ein Router 24 mit einem SHC 22 als auch mit dem Fernseher 40 über ein kabelgebundenes LAN verbunden ist. Der Router 24 ist, wie in Fig. 3 dargestellt, über das Internet 28 mit der zentralen Verwaltungseinheit 30 verbunden.

Darüber hinaus ist ein Computer 32a mit dem Router 24 verbunden.

Bei der Inbetriebnahme des Fernsehers 40 gibt dieser seine seinen Typ kennzeichnende Kennung an den Router 24 bekannt und macht diese somit in dem lokalen Netzwerk bekannt. Zur Programmierung der Heimautomatisierungssteuerung zur Einbindung des Fernsehers 40 ist ein Ablauf, wie hier in Fig. 5 dargestellt ist, vorteilhaft.

Fig. 5 zeigt ein beispielhaften Ablauf einer Kommunikation zwischen einem SHC 22, einem Personalcomputer 32a, einer zentralen Verwaltungseinheit 30, einem Sensor 2 und einem Aktor 12.

Zu Beginn einer Inbetriebnahme übermittelt der Fernseher 40 in einer Nachricht 42 seine den dem Typ kennzeichnende Kennung an den SHC 22 über den Router 24 in dem lokalen Netzwerk. Der SHC 22 wertet die empfangene Gerätekennung aus und übermittelt eine Nachricht 44 mit der empfangenen Gerätekennung an den Personalcomputer 32a. In dem Personalcomputer 32a wird in eine zur Programmierung der Heimautomatisierungsteuerung geeigneten Programm die empfangene Gerätekennung angezeigt und ein Benutzer kann bestätigen 46, dass für das angezeigte Gerät eine Programmierung der Heimautomatisierungsteuerung erfolgen soll. Diese Bestätigung wird in einer Nachricht 48 zurück an den SHC 22 übermittelt. Gleichzeitig mit der Bestätigung 46 kann der Benutzer angeben, in welchem Raum sich dieses Gerät befindet. Auch diese Information wird in der Nachricht 48 an den SHC 22 übertragen.

In dem SHC 22 wird anhand der Rauminformation ermittelt, welche Geräte der Heimautomatisierungssteuerung in diesem Raum vorhanden sind. Im vorliegenden Fall sind dies der Schalter 2 als auch die schaltbare Steckdose 12. Es sei angemerkt, dass es nicht zwingend notwendig ist, dass ausschließlich in dem angegebenen Raum angeordnete Sensoren 2 und Aktoren 12 ausgewählt werden, sondern auch derartige Aktoren 12 und Sensoren 2, die geeignet sind, ein Gerät in die Heimautomatisierung einzubinden.

Nachdem der SHC 22 diejenigen Schalter 2 und Steckdosen 12 ausgewählt hat, die geeignet sind, den Fernseher 40 in die Heimautomatisierung einzubinden, werden diese Informationen, also die Informationen zu den Sensoren 2 und Aktoren 12 als auch zu dem Gerät in einer Nachricht 50 an die Verwaltungseinheit 30 über das Internet 28 übermittelt. In der Verwaltungseinheit 30 wird zunächst überprüft, um welches Gerät es sich handelt und in einer Datenbank 30a werden alle verfügbaren Parameteroptionen für ein solches Gerät geladen.

Anschließend wird in der Verwaltungseinheit 30 ermittelt, welche Sensoren 2 und Aktoren 12 vom SHC 22 als geeignet ausgewählt wurden, das entsprechende Gerät zu programmieren. Anhand dieser Information werden die Parameteroptionen aus den ermittelten ausgewählt, die für solche Sensoren 2 und Aktoren 12 geeignet sind. Auch kann hier eine Rauminformation mit verwendet werden, um entsprechende Einstellmöglichkeiten auszuwählen. Die ausgewählten Parameteroptionen für die Einstellung der Sensoren 2 und Aktoren 12 werden von der Verwaltungseinheit 30 in einer Nachricht 52 zurück an den SHC 22 übertragen.

In dem SHC 22 werden die empfangenen Informationen aufbereitet und zur Darstellung auf dem Personalcomputer 32a in einer Nachricht 54 an diesen übermittelt.

An dem Personalcomputer 32a kann der Benutzer dann eines aus den ihm angebotenen Einstellprofilen auswählen 56. Das gewählte Einstellprofil wird in einer Nachricht 58 dem SHC 22 mitgeteilt. Anhand des gewählten Einstellprofils übermittelt der SHC 22 Konfigurationsnachrichten 60, 62 an den Sensor 2 bzw. den Aktor 12. Der Sensor 2 und der Aktor 12 werden entsprechend programmiert.

Im gegebenen Beispiel kann die Programmierung beispielsweise darin bestehen, dass der Sensor 2 mit dem Aktor 12 verknüpft wird. Ferner wird der Aktor 12 mit dem Sensor 2 verknüpft. Anschließend wird festgelegt, dass eine Schaltertätigkeit an dem Sensor 2 zu einem Schalten des Aktors 12 führt. Wenn der Benutzer nun den Fernseher 40 in die Steckdose 12 einsteckt, kann der Fernseher 40 über den Schalter 2 ein- und ausgeschaltet werden. Der Benutzer musste hierfür die jeweilige Programmierung des Schalters 2 als auch der Steckdose 12 nicht händisch vornehmen, sondern musste lediglich dass hierzu geeignete Einstellprofil auswählen 56. Dies vereinfacht die Programmierung des Systems zur Heimautomatisierung erheblich.

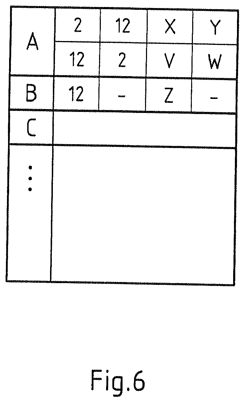

Verschiedene Einstellprofile sind in Fig. 6 dargestellt. Hier dargestellt sind Einstellprofile A, B, C. Es können jedoch beliebig viele Einstellprofile vorhanden sein. In dem Einstellprofil A kann festgelegt sein, dass der Sensor 2 mit dem Aktor 12 verknüpft ist. Ferner können Aktionen X als auch Regel Y festgelegt sein. Ferner ist in dem Einstellprofil A festgelegt, dass der Aktor 12 mit dem Sensor 2 verknüpft ist und Aktionen V sowie Regeln W hinterlegt sein. Dieses Einstellprofil A erlaubt somit eine automatische Programmierung sowohl des Sensors 2 als auch des Aktors 12.

Das Einstellprofil B betrifft lediglich den Aktor 12. Zu erkennen ist, dass keine Verknüpfung hinterlegt ist und lediglich eine Aktion Z hinterlegt ist. Die Aktion Z kann beispielsweise derart lauten, dass der Aktor 12 zwischen 1 Uhr nachts und 8 Uhr morgens ausgeschaltet ist und zwischen 8 Uhr morgens und 1 nachts eingeschaltet ist. Würde der Benutzer nun die Einstelloption B wählen, so würde die Steckdose 12 in den genannten Zeiten ein- bzw. ausgeschaltet sein. Diese Programmierung würde bei der Wahl des Einstellprofils B automatisch erfolgen und wenn der Fernseher 40 in die Steckdose 12 gesteckt ist, wäre dieser zwischen 1 Uhr nachts und 8 Uhr morgens vom Stromnetz getrennt. Andere Einstellprofile sind ebenfalls möglich, jedoch nicht ferner dargestellt.

Bei einem weiteren, nicht dargestellten Beispiel kann z.B. eine Alarmzentrale in einer Nachricht seine den Typ kennzeichnende Kennung an den SHC übermitteln. Der SHC wertet die empfangene Gerätekennung aus und übermittelt eine Nachricht mit der empfangenen Gerätekennung an den Personalcomputer. In dem Personalcomputer wird in einem zur Programmierung der Heimautomatisierungsteuerung geeigneten Programm die empfangene Gerätekennung angezeigt und ein Benutzer kann bestätigen, dass für die angezeigt Alarmzentrale eine Programmierung der Heimautomatisierungsteuerung erfolgen soll. Diese Bestätigung wird in einer Nachricht zurück an den SHC übermittelt. Gleichzeitig mit der Bestätigung kann der Benutzer angeben, in welchem Raum sich diese Alarmzentrale befindet, bzw. welchen Raum/Räume mit de Alarmzentrale abgesichert werden sollen. Auch diese Information wird in der Nachricht an den SHC übertragen.

In dem SHC wird anhand der Rauminformation ermittelt, welche Geräte der Heimautomatisierungssteuerung in diesem Raum vorhanden sind. Dies können z.B. Fensterkontakte und/oder Bewegungsmelder sein. Darüber hinaus kann überprüft werden, ob eine Kommunikationseinheit, z.B. zum Absetzen einer Nachricht als Kurznachricht oder zum Anwählen eines Sicherheitsdienstes vorhanden ist, welche beides als virtuelle Aktionen betrachtet werden können.

Nachdem der SHC diejenigen Geräte ausgewählt hat, die geeignet sind, die Alarmzentrale in die Heimautomatisierung einzubinden, werden diese Informationen an eine lokale Datenbank übermittelt. In der Datenbank wird zunächst überprüft, um welches Gerät es sich handelt und alle verfügbaren Parameteroptionen für ein solches Gerät geladen.

Anschließend wird in der Datenbank ermittelt, welche Sensoren, Aktoren und virtuelle Aktionen vom SHC als geeignet ausgewählt wurden, das entsprechende Gerät zu programmieren. Anhand dieser Information werden die Parameteroptionen aus den Ermittelten ausgewählt, die für solche Sensoren und Aktoren und virtuelle Aktionen geeignet sind. Auch kann hier eine Rauminformation mit verwendet werden, um entsprechende Einstellmöglichkeiten auszuwählen. Die ausgewählten Parameteroptionen werden von der Datenbank zurück an den SHC übertragen.

In dem SHC werden die empfangenen Informationen aufbereitet und zur Darstellung auf dem Personalcomputer in einer Nachricht an diesen übermittelt.

An dem Personalcomputer kann der Benutzer dann eines aus den ihm angebotenen Einstellprofilen auswählen. Das gewählte Einstellprofil wird in einer Nachricht dem SHC mitgeteilt. Anhand des gewählten Einstellprofils übermittelt der SHC Konfigurationsnachrichten an den Sensor, den Aktor und die Kommunikationseinheit, die dann entsprechend programmiert werden.

Mit Hilfe des gezeigten Verfahrens ist es in besonders einfacher Weise möglich, ein System zur Heimautomatisierung zu programmieren, um Haushaltsgeräte besonders einfach hierin einzubinden.

## Patentansprüche

1. Verfahren zum Betreiben eines Systems zur Heimautomatisierung umfassend:
- Empfangen einer einen Gerätetyp kennzeichnenden Kennung (42) von einem Haushaltsgerät (40),
**gekennzeichnet durch**
- Empfangen von für den Gerätetyp angepassten Parameteroptionen (52) für eine Einstellung von Sensoren (2) und/oder Aktoren (12) des Heimautomatisierungssystems,
- Bereitstellen der empfangenen Parameteroptionen (52) auf einer Benutzeroberfläche zur Auswahl **durch** einen Benutzer.

2. Verfahren nach Anspruch 1, **dadurch gekennzeichnet, dass** eine Information über das Haushaltsgerät (40) dem Benutzer auf der Benutzeroberfläche angezeigt wird.

3. Verfahren nach Anspruch 2, **dadurch gekennzeichnet, dass** nach einer benutzergesteuerten Auswahl des angezeigten Haushaltsgeräts (40) die für den entsprechenden Gerätetyp angepassten Parameteroptionen (52) von einem Zentralrechner (30) oder einer Datenbank angefordert werden.

4. Verfahren nach einem der vorangehenden Ansprüche, **dadurch gekennzeichnet, dass** von dem Benutzer eingegebene Standortinformationen des Haushaltsgeräts (40) empfangen werden.

5. Verfahren nach Anspruch 4, **dadurch gekennzeichnet, dass** abhängig von den empfangenen Standortinformationen ein Satz aus den verfügbaren Sensoren (2) und/oder Aktoren (12) ausgewählt wird und dass nur diesem Satz Parameteroptionen (52) zugeordnet werden.

6. Verfahren nach Anspruch 5, **dadurch gekennzeichnet, dass** der Satz zumindest einen Schaltaktor enthält und dass dem gewählten Schaltaktor Parameteroptionen (52) zugeordnet werden.

7. Verfahren nach einem der vorangehenden Ansprüche, **dadurch gekennzeichnet, dass** die Parameteroptionen (52) sowohl Zuordnungsinformationen von Sensoren (2) zu Aktoren (12) und hierzu entsprechende Einstellungen der einander zugeordneten Sensoren (2) und Aktoren (12) umfassen.

8. Verfahren nach einem der vorangehenden Ansprüche, **dadurch gekennzeichnet, dass** die den Gerätetyp kennzeichnende Kennung (42) unmittelbar von dem Haushaltsgerät (40) empfangen wird oder dass die den Gerätetyp kennzeichnende Kennung (42) von dem Zentralrechner (30) oder einer Datenbank empfangen wird, oder dass die den Gerätetyp kennzeichnende Kennung (42) aus dem Gerät (40) ausgelesen wird.

9. Verfahren nach einem der vorangehenden Ansprüche, **dadurch gekennzeichnet, dass** die Parameteroptionen (52) zumindest ein Einstellungsprofil für eine aufeinander abgestimmte Einstellung einer Mehrzahl von Sensoren (2) und/oder Aktoren (12) umfasst.

10. Verfahren nach einem der vorangehenden Ansprüche, **dadurch gekennzeichnet, dass** die für den Gerätetyp angepassten Parameteroptionen (52) mittels der den Gerätetyp kennzeichnenden Kennung (42) ausgewählt werden.

11. Heimautomatisierungssystemsteuerrechner umfassend:
- eine Empfangseinheit eingerichtet zum Empfangen von einer einen Gerätetyp kennzeichnenden Kennung (42) von einem Haushaltsgerät (40) und von für den Gerätetyp angepassten Parameteroptionen (52) für eine Einstellung von Sensoren (2) und/oder Aktoren (12) des Heimautomatisierungssystems,
- eine Visualisierungseinheit eingerichtet zum Bereitstellen der empfangenen Parameteroptionen auf einer Benutzeroberfläche zur Auswahl durch einen Benutzer.

12. Heimautomatisierungssystem mit einem Heimautomatisierungssystemsteuerrechner nach Anspruch 11 und zumindest einem Sensor und/oder einem Aktor.

## Claims

1. A method of operating a home automation system comprising:
- receiving an identifier (42) identifying an appliance type from a home appliance (40),
**characterized by**
- receiving parameter options (52) adapted to the appliance type for setting sensors (2) and/or actuators (12) of the home automation system,
- providing the received parameter options (52) on a user interface for selection by a user.

2. Method according to claim 1, **characterized in that** information about the home appliance (40) is displayed to the user on the user interface.

3. Method according to claim 2, **characterized in that** after a user-controlled selection of the displayed home appliance (40), the parameter options (52) adapted for the corresponding appliance type are requested from a central computer (30) or a database.

4. Method according to any of the preceding claims, **characterized in that** location information of the home appliance (40) entered by the user is received.

5. Method according to claim 4, **characterized in that** depending on the received location information a set of available sensors (2) and/or actuators (12) is selected and that only this set is assigned parameter options (52).

6. Method according to claim 5, characterize d in that the set contains at least one switching actuator and that parameter options (52) are assigned to the selected switching actuator.

7. Method according to one of the preceding claims, **characterized in that** the parameter options (52) comprise both assignment information of sensors (2) to actuators (12) and corresponding settings of the sensors (2) and actuators (12) assigned to one another.

8. Method according to one of the preceding claims, **characterized in that** the identifier (42) identifying the appliance type is received directly from the home appliance (40), or that the identifier (42) identifying the appliance type is received from the central computer (30) or a database, or that the identifier (42) identifying the appliance type is read from the home appliance (40).

9. Method according to one of the preceding claims, **characterized in that** the parameter options (52) comprise at least one setting profile for a coordinated setting of a plurality of sensors (2) and/or actuators (12).

10. Method according to one of the preceding claims, **characterized in that** the parameter options (52) adapted for the appliance type are selected by means of the identifier (42) characterizing the appliance type.

11. Home automation system control computer comprising:
- a receiving unit adapted to receive from a home appliance (40) an identifier (42) identifying an appliance type and parameter options (52) adapted to the appliance type for setting sensors (2) and/or actuators (12) of the home automation system,
- a visualization unit set up to provide the received parameter options on a user interface for selection by a user.

12. Home automation system comprising a home automation system control computer according to claim 11 and at least one sensor and/or one actuator.

## Revendications

1. Procédé de fonctionnement d'un système destiné à la domotique, ledit procédé comprenant :
- la réception, par un appareil électroménager (40), d'un identifiant (42) caractérisant un type d'appareil,
**caractérisé**
- **par** la réception d'options de paramétrage (52) adaptées pour le type d'appareil et fournies pour un réglage de capteurs (2) et/ou d'actionneurs (12) du système domotique,
- par la fourniture des options de paramétrage (52) ayant été reçues, lesdites options de paramétrage étant fournies à une interface utilisateur, afin de procéder à la sélection par un utilisateur.

2. Procédé selon la revendication 1, **caractérisé en ce qu'**une information concernant l'appareil électroménager (40) est indiquée à l'utilisateur par visualisation sur l'interface utilisateur.

3. Procédé selon la revendication 2, **caractérisé en ce que**, après une sélection de l'appareil électroménager visualisé (40), ladite sélection étant gérée par l'utilisateur, les options de paramétrage (52) adaptées pour le type d'appareil correspondant sont demandées par un ordinateur central (30) ou par une banque de données.

4. Procédé selon l'une quelconque des revendications précédentes, **caractérisé en ce que** sont reçues des informations de localisation de l'appareil électroménager (40), lesdites informations de localisation étant entrées par l'utilisateur.

5. Procédé selon la revendication 4, **caractérisé en ce que**, en fonction des informations de localisation ayant été reçues, un ensemble est sélectionné parmi les capteurs (2) et/ou les actionneurs (12) disponibles, et **en ce que** des options de paramétrage (52) sont affectées seulement à cet ensemble.

6. Procédé selon la revendication 5, **caractérisé en ce que** l'ensemble comprend au moins un actionneur de commutation et **en ce que** des options de paramétrage (52) sont affectées à l'actionneur de commutation sélectionné.

7. Procédé selon l'une quelconque des revendications précédentes, **caractérisé en ce que** les options de paramétrage (52) comprennent aussi bien des informations d'affectation provenant de capteurs (2) et passant à des actionneurs (12), et comprennent des réglages des capteurs (2) et des actionneurs (12) associés les uns aux autres, lesdits réglages correspondant auxdites options de paramétrage.

8. Procédé selon l'une quelconque des revendications précédentes, **caractérisé en ce que** l'identifiant (42) caractérisant le type d'appareil est reçu directement par l'appareil électroménager (40), ou bien **en ce que** l'identifiant (42) caractérisant le type d'appareil est reçu par l'ordinateur central (30) ou par une banque de données, ou bien **en ce que** l'identifiant (42) caractérisant le type d'appareil est lu à partir de l'appareil électroménager (40).

9. Procédé selon l'une quelconque des revendications précédentes, **caractérisé en ce que** les options de paramétrage (52) comprennent au moins un profil de réglage conçu pour un réglage coordonné de l'un par rapport à l'autre concernant une pluralité de capteurs (2) et/ou d'actionneurs (12).

10. Procédé selon l'une quelconque des revendications précédentes, **caractérisé en ce que** les options de paramétrage (52) adaptées pour le type d'appareil sont sélectionnées au moyen de l'identifiant (42) caractérisant le type d'appareil.

11. Ordinateur de commande d'un système domotique, ledit ordinateur de commande comprenant :
- une unité de réception conçue pour la réception, par un appareil électroménager (40), d'un identifiant (42) caractérisant un type d'appareil, et conçue pour la réception d'options de paramétrage (52) adaptées pour le type d'appareil et fournies pour un réglage de capteurs (2) et/ou d'actionneurs (12) du système domotique,
- une unité de visualisation conçue pour la fourniture des options de paramétrage ayant été reçues, lesdites options de paramétrage étant fournies à une interface utilisateur, afin de procéder à la sélection par un utilisateur.

12. Système domotique comprenant un ordinateur de commande du système domotique selon la revendication 11, et comprenant au moins un capteur et/ou un actionneur.
